# EUROPÄISCHE PATENTSCHRIFT

(11) **EP 2 554 356 B1**
(45) Veröffentlichungstag und Bekanntmachung des Hinweises auf die Patenterteilung: **28.01.2015**
(21) Anmeldenummer: 12179084.4
(22) Anmeldetag: 02.08.2012
(51) Int. Cl.: B29C 49/42, B65G 47/256

(54) **Vorrichtung und Verfahren zum Transportieren und Aussondern von Kunststoffvorformlingen**
Apparatus and method for conveying and sorting plastic preforms
Dispositif et procédé pour transporter et séparer des préformes plastiques

(30) Priorität: 05.08.2011 DE 102011109542
(43) Veröffentlichungstag der Anmeldung: 06.02.2013
(73) Patentinhaber: Krones AG, 93073 Neutraubling (DE)
(72) Erfinder: Seidl, Andreas, 93093 Donaustauf (DE); Sowislo, Peter, 93155 Hemau (DE)
(74) Vertreter: Bittner, Bernhard

(56) Entgegenhaltungen:
- EP-A1- 2 065 320
- WO-A1-2010/006461
- WO-A1-2011/069268
- DE-T2-602004 006 164
- US-B1- 6 575 305

## Beschreibung

Die vorliegende Erfindung bezieht sich auf eine Transport- und Aussondervorrichtung für Kunststoffbehältnisse und insbesondere für Kunststoffvorformlinge. Aus dem Stand der Technik sind derartige Vorrichtungen zum Transportieren von Kunststoffvorformlingen bekannt. Diese dienen beispielsweise dazu, Kunststoffvorformlinge aus einem Vorrat in eine Maschine, wie beispielsweise eine Blasformmaschine, zu fördern. Dabei sind beispielsweise Vorrichtungen bekannt, bei denen die Kunststoffvorformlinge zwischen zwei sich drehenden Rollen gefördert werden um auf diese Weise neben dem Transport auch eine Sortierung der Kunststoffvorformlinge zu erreichen.

Bei einem derartigen Transport kann es vorkommen, dass Vorformlinge verkeilen, so dass beispielsweise ein Vorformling in der Mündung eines weiteren Vorformlings steckt. Derartige Störungen können den Maschinenbetrieb empfindlich beeinträchtigen. Daher sind aus dem Stand der Technik Ausschleusvorrichtungen bekannt, welche derartige Störungen beseitigen. Eine aus dem Stand der Technik bekannte Möglichkeit besteht darin, ein sogenanntes Kickerrad vorzusehen, welches, falls eine derartige Störung erkannt wird, die entsprechenden Kunststoffvorformlinge auswirft.

So beschreibt beispielsweise die WO 2010/006461 eine Anordnung zum Aussondern zylindrischer Körper wie beispielsweise Kunststoffvorformlinge. Diese Vorrichtung weist eine Höhenführung auf, wobei ein Abstand zwischen dieser Höhenvorrichtung und den Kunststoffvorformlingen in der Transportrichtung der Kunststoffvorformlinge absinkt. In Reaktion auf ein Signal, wie etwa ein Signal, welches verkeilte Kunststoffvorformlinge anzeigt, kann diese Höhenvorrichtung angehoben werden, um diese verkeilten Kunststoffvorformlinge auswerfen zu können.

Diese Vorrichtung bringt jedoch den Nachteil einer relativ aufwendigen Mechanik mit sich, um die besagte Höhenvorrichtung zu verstellen.

Weiterhin kann es zu einem jeweils kurzfristigen Anhalten eines Flusses der Kunststoffvorformlinge kommen.

Der Erfindung liegt daher die Aufgabe zugrunde, derartige Transport- und Auswerfeinrichtungen zu verbessern. Dies wird erfindungsgemäß durch Vorrichtungen und Verfahren nach den unabhängigen Ansprüchen erreicht. Vorteilhafte Ausführungsformen und Weiterbildungen sind Gegenstand der Unteransprüche.

Eine erfindungsgemäße Transport- und Aussondervorrichtung für Kunststoffbehältnisse und insbesondere für Kunststoffvorformlinge weist eine Transporteinrichtung auf, welche die Kunststoffbehältnisse entlang eines vorgegebenen Transportpfades transportiert. Weiterhin weist die Vorrichtung eine entlang dieses Transportpfades angeordnete Aussondereinrichtung auf, welche geeignet ist, fehlerhaft transportierte Kunststoffvorformlinge von dem Transportpfad auszusondern (bzw. auszuwerfen oder auszuschleusen).

Erfindungsgemäß weist die Transport- und Aussondervorrichtung eine in der Transportrichtung der Kunststoffbehältnisse zumindest teilweise stromaufwärts der Aussondereinrichtung angeordnete Abtrenneinrichtung auf, welche diese Kunststoffbehältnisse quer zu dem Transportpfad in einen Bereich abdrängt, in dem diese Kunststoffbehältnisse von der Aussondereinrichtung aussonderbar sind.

Es wird daher vorgeschlagen, dass derartige Kunststoffbehältnisse bzw. Kunststoffvorformlinge, bei denen es sich insbesondere um fehlorientierte und insbesondere um ineinandersteckende Kunststoffvorformlinge handelt, derart separiert oder abgedrängt werden, dass der störende Kunststoffvorformling von der Aussondereinrichtung aussonderbar ist bzw. in deren Aktionsbereich gelangt. Im Gegensatz zu dem oben beschriebenen Stand der Technik wird daher nicht die besagte Höhenvorrichtung angehoben, um beispielsweise verkeilte Kunststoffvorformlinge passieren zu lassen, sondern diese Kunststoffvorformlinge werden - insbesondere aktiv - quer zu dem Transportpfad, d.h. insbesondere links oder rechts von dem Transportpfad seitlich abgelenkt bzw. abgedrängt, um so ausgesondert zu werden. Bezüglich des Transportpfades werden dahin die Kunststoffvorformlinge insbesondere nach außen abgedrängt.

Unter einem Abdrängen quer zum Transportpfad wird insbesondere verstanden, dass die Kunststoffvorformlinge zumindest derart abgedrängt werden, dass eine Richtung dieser Abdrängung schräg und insbesondere senkrecht zu dem Transportpfad steht oder zumindest eine Komponente in dieser senkrechten Richtung aufweist.

Bei einer bevorzugten Ausführungsform weist die Transporteinrichtung wenigstens eine drehbare Rolle und bevorzugt wenigstens zwei drehbare Rollen auf, zwischen denen Kunststoffvorformlinge angeordnet werden. Diese beiden Rollen stützen hier die Kunststoffvorformlinge unterhalb ihrer Mündung beispielsweise an ihrem Tragring und durch die Drehung dieser Rollen wird eine Sortierung der Kunststoffvorformlinge erreicht. Es wäre jedoch auch denkbar, dass es sich bei der Transporteinrichtung um eine Führungsschiene für die Kunststoffvorformlinge handelt. Denkbar wäre auch ein sog. Luftförderer, bei dem die Kunststoffvorformlinge durch einen Luftstrom transportiert werden.

Vorteilhaft handelt es sich jedoch um eine Transporteinrichtung, welche die Kunststoffvorformlinge nicht vereinzelt führt, so dass diese nicht notwendig definierte Abstände in der Transportrichtung zwischen sich aufweisen.

Bei einer weiteren vorteilhaften Ausführungsform weist die Transporteinrichtung einen Abstützbereich auf, der die Kunststoffvorformlinge in wenigstens einen Bereich abstützt und der die Kunststoffbehältnisse insbesondere in einem Bereich abstützt, der oberhalb eines Bodenbereiches der Kunststoffvorformlinge, jedoch bevorzugt unterhalb eines Gewindebereiches der Kunststoffvorformlinge liegt. Falls die Transporteinrichtung die oben erwähnten zwei Rollen aufweist, kann ein Außenumfang dieser Rollen der genannte Abstützbereich sein.

Insbesondere stützt die Transporteinrichtung die Kunststoffvorformlinge, wie oben erwähnt, unterhalb ihres Tragringes ab. Vorteilhaft weist die Transporteinrichtung daher eine Ausnehmung, beispielsweise einen Spalt, auf, durch den ein Grundkörper der Kunststoffvorformlinge hindurchtreten kann, insbesondere jedoch nicht der besagte Tragring.

Die erfindungsgemäße Vorrichtung dient insbesondere auch zum Aussondern von verkeilten Kunststoffvorformlingen. Bevorzugt dient die erfindungsgemäße Vorrichtung zum Aussondern solcher Kunststoffvorformlinge, deren Mündung während des Transports höher liegt als die Mündungen der übrigen Kunststoffvorformlinge.

Bei einer weiteren vorteilhaften Ausführungsform weist die Aussondereinrichtung wenigstens einen Kontaktkörper auf, der die Kunststoffbehältnisse kontaktiert, um sie auszusondern. Vorteilhaft ist dieser Kontaktkörper beweglich angeordnet, um besonders bevorzugt die Kunststoffvorformlinge auszuwerfen. Vorteilhaft kann es sich bei der Aussondereinrichtung um ein sogenanntes Kickerrad handeln, welches besonders bevorzugt wenigstens teilweise oberhalb und besonders bevorzugt vollständig oberhalb der Kunststoffvorformlinge bzw. oberhalb deren Transportpfades angeordnet ist.

Vorteilhaft ist der Kontaktkörper oberhalb der Kunststoffvorformlinge bzw. oberhalb derjenigen Kunststoffvorformlinge, die nicht fehlerhaft transportiert werden, angeordnet. Es wäre jedoch auch möglich, dass ein Auswurf der Kunststoffvorformlinge durch Luftbeaufschlagung, beispielsweise durch Druckluftdüsen, erfolgt. In diesem Falle würden verkeilte Kunststoffvorformlinge gezielt mit einem Luftstrom beaufschlagt werden, der diese auswirft. Auch wären Aussondervorrichtungen denkbar, die bei Erkennen eines verkeilten Kunststoffvorformlings diesen von unten aus dem Transportpfad herausschlagen.

Vorteilhaft ist die Aussondereinrichtung derart angeordnet, dass sie ordnungsgemäß transportierte Kunststoffvorformlinge nicht berührt bzw. kontaktiert. So kann beispielsweise die Aussondervorrichtung auf beiden Seiten quer zu dem Transportpfad Kontaktkörper aufweisen, die jedoch unmittelbar senkrecht über dem Transportpfadkontaktkörper angeordnet bzw. ausgespart sein können. Auf diese Weise kann ein Kontaktieren bzw. ein Auswurf ordnungsgemäß transportierter Kunststoffbehältnisse verhindert werden.

Bei einer weiteren vorteilhaften Ausführungsform ist die Abdrängeinrichtung oberhalb des Transportpfades der Kunststoffbehältnisse angeordnet. Dabei ist vorteilhaft die Abdrängeinrichtung derart angeordnet, dass sie ordnungsgemäße Kunststoffbehältnisse nicht kontaktiert oder diese zumindest nicht derart kontaktiert, dass diese durch den Kontakt abgedrängt werden.

Bei einer bevorzugten Ausführungsform erstreckt sich die Abdrängeinrichtung entlang des Transportpfades der Kunststoffbehältnisse und weist entlang des Transportpfades eine Länge von wenigstens 3 cm, bevorzugt von wenigstens 5 cm und besonders bevorzugt von wenigstens 10 cm auf. Vorteilhaft ist die Abdrängeinrichtung symmetrisch bezüglich einer vorgegebenen Symmetrieebene ausgebildet und diese Symmetrieebene enthält besonders bevorzugt auch den geometrischen Transportpfad der ordnungsgemäß transportierten Kunststoffvorformlinge.

Bei einer weiteren vorteilhaften Ausführungsform ist die Abdrängeinrichtung starr gegenüber dem Transportpfad der Kunststoffbehältnisse angeordnet. Im Gegensatz zu dem oben genannten Stand der Technik wird damit hier die Abdrängvorrichtung nicht aus dem Transportpfad der Kunststoffbehältnisse genommen, sondern bewirkt, wie oben erwähnt, ein absichtliches Abdrängen der fehlerhaft transportierten Kunststoffvorformlinge.

Vorteilhaft ist die Abdrängeinrichtung derart gestaltet, dass die Kunststoffbehältnisse seitlich nach außen aus der Mitte heraus bezüglich des Transportpfades abgedrängt werden.

Bei einer weiteren vorteilhaften Ausführungsform weist die Abdrängeinrichtung eine erste Kontaktfläche zum Kontaktieren der Kunststoffbehältnisse auf, welche gegenüber einer horizontalen Ebene, innerhalb der der Transportpfad der Kunststoffbehältnisse verläuft, schräg angeordnet ist und die geeignet ist, die Kunststoffvorformlinge quer zu dem Transportpfad abzudrängen.

Vorteilhaft handelt es sich bei dieser Kontaktfläche um eine ebene bzw. gerade Fläche, die gegenüber der horizontalen Ebene einen konstanten Winkel einschließt, wobei dieser Winkel insbesondere entlang des Transportpfades bzw. in der Transportrichtung der Kunststoffvorformlinge konstant ist. Beim Anlaufen an diese Kontaktfläche werden die Kunststoffvorformlinge seitlich abgedrängt, genauer gesagt, bevorzugt mit einer Kraft beaufschlagt, welche senkrecht zu der Kontaktfläche steht und so nach außen bezüglich des Transportpfades abgedrängt.

Bei einer weiteren vorteilhaften Ausführungsform weist die Abdrängeinrichtung eine zweite Kontaktfläche zum Kontaktieren der Kunststoffbehältnisse auf, welche gegenüber einer horizontalen Ebene, innerhalb der der Transportpfad der Kunststoffbehältnisse verläuft, schräg angeordnet ist und welche ebenfalls geeignet ist, die Kunststoffvorformlinge quer zu dem Transportpfad abzudrängen. Vorteilhaft schließen damit die erste Kontaktfläche und die zweite Kontaktfläche einen entlang des Transportpfades konstanten Winkel miteinander ein.

Durch das Zusammenspiel dieser beiden Kontaktflächen können die Kunststoffbehältnisse und insbesondere ineinander verkeilten Kunststoffbehältnisse seitlich bzw. quer zu dem Transportpfad abgelenkt werden. Je nachdem, welche Kontaktfläche die Kunststoftbehältnisse berührt, werden diese bezüglich des Transportpfades nach rechts oder links, jedenfalls nach seitlich außen, abgedrängt. Es wäre jedoch auch möglich, dass sich der Winkel zwischen den Kontaktflächen entlang des Transportpfades vergrößert, was zu einer stärker werden Abdrängung bzw. Ablenkung der Kunststoffvorformlinge führt.

Bei einer weiteren vorteilhaften Ausführungsform ist zwischen der ersten Kontaktfläche und der zweiten Kontaktfläche eine Kante ausgebildet. Diese Kante kann dabei insbesondere geradlinig verlaufen, bevorzugt jedoch verläuft diese Kante ebenfalls entlang des Transportpfades . Die Kante bildet bevorzugt einen Keil aus. Durch das Vorsehen eines derartigen Keils kann ein Abdrängen der Kunststoffvorformlinge, je nachdem, wie diese verkeilt sind, erreicht werden. Falls beispielsweise ein Kunststoffvorformling derart verkeilt ist, dass seine Mündung leicht nach links seitlich gegenüber dem Transportpfad versetzt ist, so wird dieser Kunststoffvorformling nach links bezüglich des Transportpfades abgelenkt. Es wäre jedoch auch denkbar, dass zwischen den besagten Kontaktflächen eine abgerundete Kante ausgebildet ist. Durch das Anlaufen an diese Kante kommt es, wie oben erwähnt, zu einem Abdrängen der Kunststoffvorformlinge. Dabei werden vorteilhaft durch diese Kante und die sich daran anschließenden Kontaktflächen alle Kunststoffvorformlinge nach genau einer Seite hin abgelenkt.

Vorteilhaft liegt ein Winkel zwischen den beiden Kontaktflächen zwischen 20° und 120°, bevorzugt zwischen 30 ° und 90 °, besonders bevorzugt zwischen 40 ° und 80°.

Bei einer weiteren vorteilhaften Ausführungsform weist die Abdrängeinrichtung einen Anfangsabschnitt auf, in dem sich ein Abstand zwischen den Kunststoffbehältnissen und der Abdrängeinrichtung in der Transportrichtung der Kunststoffvorformlinge verringert. So können beispielsweise die oben erwähnte Kante oder auch die Kantenflächen bugartig ausgebildet sein, so dass sich in der Transportrichtung der Kunststoffvorformlinge der besagte Bug an die Kunststoffvorformlinge annähert. Auf diese Weise kann ein Heranführen der besagten Kontaktflächen von oben an die Kunststoffvorformlinge bewirkt werden und auf diese Weise kann einerseits ein Verkanten und Steckenbleiben der Kunststoffbehältnisse verhindert werden und andererseits diese Gerade auch durch das Heranführen nach links oder rechts bezüglich des Transportpfades abgelenkt werden. Im Anfangsbereich der Abdrängeinrichtung könnten jedoch auch abgerundete Flächen vorgesehen sehen, welche die Kunststoffvorformlinge abdrängen oder zumindest anfänglich abdrängen.

Vorteilhaft ist damit ein Anfangsbereich oder allgemein ein vorgegebener Bereich der Abdrängeinrichtung in der Art einer (Einführ)schräge ausgebildet. Diese (Einführ)schräge kann dabei derart gestaltet sein, dass eine auf die fehlerhaft ausgerichteten Kunststoffvorformlinge quer zu dem Transportpfad wirkende Kraft sich in der Transportrichtung der Kunststoffvorformlinge erhöht. So könnten Übergangsflächen ausgebildet sein, welche in die oben erwähnten Kontaktflächen übergehen.

Bei einer weiteren vorteilhaften Ausführungsform weist die Abdrängeinrichtung einen gekrümmten Bereich auf, vorteilhaft handelt es sich hierbei wiederum um den besagten Anfangsbereich, in dem sich die Abdrängeinrichtung an den Kunststoffvorformling in dessen Transportrichtung annähert.

Bei einer weiteren vorteilhaften Ausführungsform weist die Transport- und Aussondervorrichtung einen weiteren Drängbereich auf, der wenigstens einen Teil der Kunststoffvorformlinge nach unten drängt.

Dieser weitere Drängbereich ist in der Transportrichtung vorteilhaft nach der Abdrängeinrichtung vorgesehen und drückt bevorzugt solche Kunststoffvorformlinge, die zwar nicht ineinander verkeilt sind, jedoch auch nicht optimal gegenüber dem Transportpfad ausgerichtet sind, auf den Transportpfad zu. Insbesondere drängt die Drängeinrichtung bzw. der Drängbereich derartige Kunststoffvorformlinge nach unten. Vorteilhaft erstreckt sich auch der Dränbereich entlang des Transportpfades der Kunststoffvorformlinge.

Bei einer bevorzugten Ausführungsform ist diese Drängeinrichtung einteilig mit der Abdrängeinrichtung ausgebildet. Hierdurch wird eine besonders kostengünstige Ausführungsform erreicht.

Bei einer weiteren vorteilhaften Ausführungsform sind die Abdrängeinrichtung und/oder der Drängbereich innerhalb einer durch die Aussondereinrichtung ausgebildeten Ausnehmung angeordnet. So ist es möglich, dass die Abdrängeinrichtung an einen Träger angeordnet ist, der sich, wie oben erwähnt, bevorzugt entlang des Transportpfades oder in der Transportrichtung der Kunststoffvorformlinge erstreckt und der in die besagte Ausnehmung der Aussondereinrichtung hineinragt. Auch die Drängeinrichtung ist vorteilhaft an einem Träger angeordnet.

Bei einer weiteren vorteilhaften Ausführungsform handelt es sich bei der Abdrängeinrichtung um ein Kunststoffelement und besonders bevorzugt um ein Spritzgießteil. Insbesondere im Falle eines Kunststoffelementes können die oben erwähnten Kontaktflächen relativ einfach hergestellt werden. Es wäre jedoch auch möglich, ein anderes Material, etwa Aluminium oder ein anderes Metall zum Herstellen der Abdrängeinrichtung vorzusehen.

Die vorliegende Erfindung ist weiterhin auf ein Verfahren zum Transportieren von Kunststoffbehältnissen und insbesondere von Kunststoffvorformlingen gerichtet, wobei die Kunststoffvorformlinge von einer Transporteinrichtung entlang eines vorgegebenen Transportpfades transportiert werden und wobei ein Teil dieser Kunststoffvorformlinge und insbesondere fehlerhaft transportierte Kunststoffvorformlinge von einer Aussondereinrichtung von dem Transport ausgesondert werden. Vorteilhaft werden diese Kunststoffvorformlinge aussortiert bzw. ausgeworfen so dass sie den Transportpfad verlassen.

Erfindungsgemäß werden diese fehlerhaft transportierten Kunststoffbehältnisse zunächst von einer Abdrängeinrichtung kontaktiert und durch diesen Kontakt quer zu dem Transportpfad von dem Transportpfad abgedrängt und die derart abgedrängten Kunststoffbehältnisse werden anschließend von der Aussondereinrichtung ausgesondert.

Vorteilhaft erfolgt dieses Aussondern durch ein Kontaktieren der Kunststoffbehältnisse, beispielsweise durch ein Kontaktieren eines Mündungsbereiches der Kunststoffvorformlinge. Es wäre jedoch auch möglich, dass die Abdrängeinrichtung die Kunststoffvorformlinge nicht direkt kontaktiert werden, sondern beispielsweise ein Druckluftstrom vorgesehen ist, der diese fehlorientierten Kunststoffvorformlinge seitlich abdrängt.

Vorteilhaft handelt es sich bei den fehlerhaft transportierten Kunststoffvorformlingen auch hier wieder um ineinander verkeilte Kunststoffvorformlinge, d.h. die oben erwähnte Situation, dass ein Kunststoffvorformling in einem weiteren Kunststoffvorformling steckt.

Bei einem vorteilhaften Verfahren werden die Kunststoffbehältnisse zumindest zeitweise durch ihre eigene Bewegung entlang des Transportpfades abgedrängt. So bewegen sich die Kunststoffvorformlinge gegen den oben erwähnten Bereich der Abdrängvorrichtung und werden so seitlich nach außen bezüglich des Transportpfades abgedrängt.

Vorteilhaft werden die Kunststoffbehältnisse je nach ihrer geometrischen Lage gegenüber der Abdrängeinrichtung entweder in eine erste Richtung abgedrängt oder in eine zweite Richtung, welche der ersten Richtung gegenüber entgegengesetzt ist.

In Richtung des Transportpfades der Kunststoffbehältnisse erfolgt daher ein Abdrängen nach rechts oder links, wobei diese Abdrängung bevorzugt von der ursprünglichen Anfangsanordnung der Kunststoffvorformlinge abhängt.

Vorteilhaft werden die Kunststoffvorformlinge senkrecht zu ihrem Transportpfad oder wenigstens schräg zu dem Transportpfad abgelenkt. Bei einem weiteren vorteilhaften Verfahren wirft die Aussondereinrichtung die Kunststoffbehältnisse durch einen Kontakt derselben aus. Bei einem weiteren vorteilhaften Verfahren werden die Kunststoffvorformlinge wenigstens abschnittsweise durch ihre eigene Schwerkraft bewegt bzw. gefördert.

Weitere Vorteile und Ausführungsformen ergeben sich aus den beigefügten Zeichnungen:
darin zeigen:
   - Fig. 1: eine Seitenansicht einer erfindungsgemäßen Transport- und Aussondereinrichtung; und
   - Fig. 2: eine Vorderansicht auf die Vorrichtung aus Fig. 1 entlang des Transportpfades der Kunststoffbehältnisse.

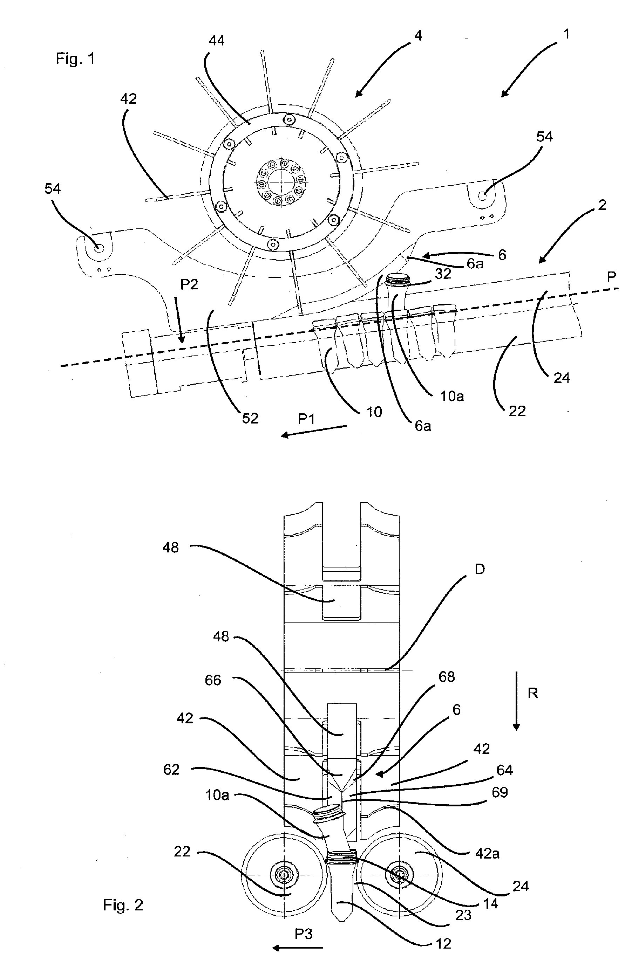

Fig. 1 zeigt eine erfindungsgemäße Transport- und Aussondervorrichtung 1, welche zum Transportieren und Aussondern von Kunststoffvorformlingen 10 und 10a dient. Dabei bezieht sich hier das Bezugszeichen 10 auf die ordnungsgemäß transportierten Kunststoffvorformlinge, wohingegen das Bezugszeichen 10a einen fehlerhaft transportierten Kunststoffvorformling anzeigt, der beispielsweise innerhalb eines anderen Kunststoffvorformlings steckt. Man erkennt, dass dieser Kunststoffvorformling 10a über die anderen Kunststoffvorformlinge hinausragt.

Das Bezugszeichen 2 kennzeichnet eine Transporteinrichtung, welche zum Transportieren der Kunststoffvorformlinge entlang des gestrichelt eingezeichneten Transportpfades P dient. Bei dieser Ausführungsform weist die Transporteinrichtung zwei Rollen 22, 24 auf, zwischen denen ein Spalt ausgebildet ist, durch den zwar ein Grundkörper der Kunststoffvorformlinge treten kann, nicht jedoch der Tragring 32 der Kunststoffvorformlinge, so dass diese an ihrem Tragring gefördert werden. Durch die Drehung der Rollen 22, 24 sowie die leichte Schrägstellung gegenüber der horizontalen Ebene wird erreicht, dass die Kunststoffvorformlinge gegenüber den Rollen 22, 24 nach links gleiten bzw. gefördert werden.

Das Bezugszeichen 4 kennzeichnet in seiner Gesamtheit eine Aussondereinrichtung, welche zum Aussondern der fehlerhaft transportierten Kunststoffvorformlinge 10a dient. Diese Aussondereinrichtung 4 weist hier eine Vielzahl von Kontaktkörpern 42 auf, die an einen Träger 44, hier an einem Trägerrad 44, angeordnet sind. Durch ein Drehen dieses Trägerrades, beispielsweise mitlaufend mit den Vorformlingen im Transportpfad oder entgegengesetzt laufend (in der Figur1 im oder entgegen dem Uhrzeigersinn), können die fehlerhaft transportierten Kunststoffvorformlinge 10a ausgesondert werden. Dabei können beispielsweise die Kontaktkörper an die Kunststoffvorformlinge bzw. deren Gewinde schlagen, um diese Kunststoffvorformlinge auszuwerfen. Man erkennt weiterhin, dass die ordnungsgemäß transportierten Kunststoffvorformlinge 10 nicht in den Aktionsbereich der Kontaktkörper 42 bzw. der Aussondereinrichtung gelangen.

Das Bezugszeichen 6 kennzeichnet eine Abdrängeinrichtung, die, wie oben erwähnt, zum Abdrängen der Kunststoffvorformlinge 10a dient. Sobald die Kunststoffvorformlinge 10a an diese Abdrängeinrichtung anlaufen, werden sie, wie unten genauer erläutert, seitlich bezüglich des Transportpfades abgedrängt und können dann von der Aussondereinrichtung 4 bzw. den Kontaktkörpern 42 ausgesondert werden. Das Bezugszeichen 54 kennzeichnet eine Befestigungseinrichtung, um die Abdrängeinrichtung 6 hier starr gegenüber dem Transportpfad P anzuordnen.

Man erkennt weiterhin, dass sich die Abdrängeinrichtung 6, beziehungsweise eine Unterseite derselben, an den Transportpfad P in der Transportrichtung P1 der Kunststoffvorformlinge an diesen annähert. Bei der hier gezeigten Ausführungsform weist die Abdrängeinrichtung 6 einen gekrümmten Abschnitt 6a auf, der dieses Annähern der Abdrängeinrichtung 6 an die Kunststoffvorformlinge 10 bzw. 10a bzw. an den Transportpfad P bewirkt.

Das Bezugszeichen 52 kennzeichnet einen weiteren Drängbereich, in den die ordnungsgemäß transportierten Kunststoffvorformlinge 10 auf den Transportpfad P zugedrängt werden. Dabei kann es möglich sein, dass derartige Kunststoffvorformlinge noch leicht aus ihrem Transportpfad herausstehen und auf diese Weise hier nach unten, d.h. in Richtung des Pfeiles P2, gedrängt werden. Dieser Drängbereich 52 kann dabei ebenfalls kantenartig oder kielartig ausgeführt sein, es wäre jedoch eine abgeflachte Ausgestaltung denkbar.

Daneben kann auch noch beispielsweise in der Transportrichtung P stromaufwärts bezüglich der Abdrängeinrichtung 6 eine Erfassungseinrichtung (nicht gezeigt) vorgesehen sein, wie beispielsweise eine Lichtschrankeneinheit, welche auch optisch fehlerhaft transportierte Kunststoffvorformlinge 10a erfasst. Auch kann stromabwärts der Abdrängeinrichtung 6 eine weitere derartige Erfassungseinrichtung vorgesehen sein, welche in anderer Weise schlecht orientierte (beispielsweise in der Transportrichtung horizontal liegende Kunststoffvorformlinge erfasst.

Neben der Aussondereinrichtung 4 könnten auch noch weitere Aussondervorrichtungen (nicht gezeigt) vorhanden sein, welche beispielsweise auch ein Auswerfen der Kunststoffvorformlinge nach unten ermöglichen. So könnte beispielsweise ein Teil der Rollen 22, 24 verschoben werden, um so den Spalt zwischen den Rollen zu erhöhen und ein Aussondern der Kunststoffvorformlinge zu bewirken.

An die beiden Rollen 22, 24 kann sich eine weitere Transporteinrichtung für die Kunststoffvorformlinge anschließen, welches beispielsweise als Führungsschiene ausgebildet sein kann.

Figur 2 zeigt eine Ansicht der Vorrichtung 1 entlang des Transportpfades P, der sich hier in die Figurenebene hinein erstreckt.

Hier sind auch wieder die Transportelemente 22 und 24, die hier als drehbare Rollen ausgeführt sind, dargestellt. Zwischen diesen Rollen, die hier auch als Abstützeinrichtung für die Kunststoffvorformlinge dienen, wird ein Spalt 23 gebildet, den ein Grundkörper 12 des Kunststoffvorformlings passieren kann, nicht jedoch dessen Gewindebereich 14.

Man erkennt, dass der fehlorientierte Kunststoffvorformling 10a an die in ihrer Gesamtheit mit 6 bezeichnete Abdrängvorrichtung 6 anlaufen kann. Diese Abdrängeinrichtung 6 weist zunächst eine erste Fläche 66 auf, welche beispielsweise sehr weit herausragende Kunststoffvorformlinge erfassen und nach unten drängen kann. Hieran schließen sich zwei Übergangsflächen 68 an und hieran wiederum die hier senkrecht zu der Figurenebene stehenden Kontaktflächen 62 und 64. Zwischen diesen beiden Kontaktflächen 62 und 64 bildet die Abdrängeinrichtung eine Kante bzw. einen Kiel 69 aus. Mittels der Übergangsflächen können die Kunststoffvorformlinge mit zunehmender Kraft nach außen d.h. in Fig. 2 nach links bzw. rechts gedrängt werden. Damit verhindern diese Übergangsflächen 68 ein Blockieren der Kunststoffvorformlinge 10a. Diese Übergangsflächen sind hier gegenüber den Kontaktflächen um einen Winkel abgeschrägt, der zwischen 10° und 50°, bevorzugt zwischen 10° und 40° und besonders bevorzugt zwischen 10° und 30° liegt.

Anstelle der Fläche 66 und der Übergangsflächen 68 könnte jedoch auch ein abgerundeter Abschnitt vorgesehen sein, der in die Kontaktflächen übergeht.

Je nach ihrer Fehlorientierung gelangen die Kunststoffvorformlinge 10a entweder in Kontakt mit der Kontaktfläche 62 oder mit der Kontaktfläche 64. Der in Figur 2 gezeigte Kunststoffvorformling 10a wird in Kontakt mit der Kontaktfläche 62 gelangen und von dieser seitwärts, d.h. hier nach links, siehe Pfeil P3, abgelenkt werden. In diesem abgedrängten Zustand kann der Kunststoffvorformling 10a von den Kontaktelementen 42, hier den linksseitigen Kontaktelementen 42 der Aussondereinrichtung 4, erfasst werden. Diese Aussondereinrichtungen weisen dabei Kontaktkanten 42a auf, die sich hier quer zu dem Transportpfad, d.h. in der Richtung P3 oder hierzu entgegengesetzten Richtung in einer radialen Richtung R der Aussondereinrichtung zurückziehen. Durch diese Ausgestaltung können die Kontaktelemente sehr nahe an die Rollen 22, 24, herangeführt werden, ohne diese zu berühren. Auf diese Weise kann erreicht werden, dass alle diejenigen Kunststoffvorformlinge erfasst werden, welche in anderen Kunststoffvorformlingen stecken. Vorteilhaft werden die Kontaktelemente 42 sowohl den Kunststoffvorformling 10a aus als auch denjenigen Kunststoffvorformling, in dem dieser Kunststoffvorformling steckt.

Das Bezugszeichen D kennzeichnet eine Drehachse, um die die Aussondereinrichtung 4 in ihrer Gesamtheit drehbar ist. Das Bezugszeichen 48 kennzeichnet eine Ausnehmung bzw. Aussparung, die hier direkt oberhalb des Transportpfades P der Kunststoffvorformlinge liegt. Durch diese Aussparung wird erreicht, dass korrekt angeordnete Kunststoffvorformlinge 10 nicht von den Kontaktelementen 42 berührt werden. Wie oben erwähnt, ist auch die Abdrängeinrichtung 6 bzw. die Kante 68 zumindest abschnittsweise in dieser Aussparung 48 angeordnet.

Die Erfindung wurde hier unter Bezugnahme auf Kunststoffvorformlinge beschrieben, es wird jedoch darauf hingewiesen, dass die Vorrichtung auch für andere Behältnisse, wie etwa Kunststoffflaschen, Glasflaschen, Kleinbehältnisse, Behältnisverschlüsse und dergleichen anwendbar ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Transport- und Aussondervorrichtung
- 2: Transporteinrichtung
- 4: Aussondereinrichtung
- 6: Abdrängeinrichtung
- 6a: gekrümmter Abschnitt
- 10: Kunststoffvorformlinge (ordnungsgemäß transportiert)
- 10a: Kunststoffvorformlinge (fehlerhaft transportiert)
- 12: Grundkörper des Kunststoffvorformlings
- 14: Gewindebereich des Kunststoffvorformlings
- 22: Rolle/ Transportelement
- 23: Spalt
- 24: Rolle/ Transportelement
- 32: Tragring
- 42: Kontaktkörper/ -element
- 42a: Kontaktkanten
- 44: Träger/ Trägerrad
- 48: Ausnehmung/ Aussparung
- 52: Drängbereich
- 54: Befestigungseinrichtung
- 62: Kontaktfläche (senkrecht zur Figurenebene)
- 64: Kontaktfläche (senkrecht zur Figurenebene)
- 66: erste Fläche
- 68: Übergangsfläche
- 69: Kiel, Kante

- D: Drehachse
- P: Transportpfad
- P1: Transportrichtung
- P2: Pfeil
- P3: Pfeil
- R: radiale Richtung

## Patentansprüche

1. Transport- und Aussondervorrichtung (1) für Kunststoffbehältnisse und insbesondere für Kunststoffvorformlinge (10), mit einer Transporteinrichtung (2), welche die Kunststoffbehältnisse (10) entlang eines vorgegebenen Transportpfades (P) transportiert, und mit einer entlang des Transportpfades (P) angeordneten Aussondereinrichtung (4), welche geeignet ist, fehlerhaft transportierte Kunststoffvorformlinge (10a) von dem Transportpfad auszusondern,
**dadurch gekennzeichnet, dass**
die Transport- und Aussondereinrichtung (1) eine in der Transportrichtung der Kunststoffbehältnisse zumindest teilweise stromaufwärts der Aussondereinrichtung (4) angeordnete Abdrängeinrichtung (6) aufweist, welche diese Kunststoffbehältnisse (10a) quer zu dem Transportpfad (P) in einen Bereich abdrängt, in dem diese Kunststoffbehältnisse (10a) von der Aussondereinrichtung (4) aussonderbar sind.

2. Transport- und Aussondervorrichtung (1) nach Anspruch 1,
**dadurch gekennzeichnet, dass**
die Aussondereinrichtung (4) wenigstens einen Kontaktkörper (42) aufweist, der die Kunststoffbehältnisse (10a) kontaktiert, um diese auszusondern.

3. Transport- und Aussondervorrichtung (1) nach wenigstens einem der vorangegangenen Ansprüche,
**dadurch gekennzeichnet, dass**
die Abdrängeinrichtung (6) oberhalb des Transportpfades der Kunststoffbehältnisse (10a) angeordnet ist.

4. Transport- und Aussondervorrichtung (1) nach wenigstens einem der vorangegangenen Ansprüche,
**dadurch gekennzeichnet, dass**
die Abdrängeinrichtung (6) starr gegenüber dem Transportpfad (P) der Kunststoffbehältnisse (10) angeordnet ist.

5. Transport- und Aussondervorrichtung (1) nach wenigstens einem der vorangegangenen Ansprüche,
**dadurch gekennzeichnet, dass**
die Abdrängeinrichtung (6) eine erste Kontaktfläche (62) zum Kontaktieren der Kunststoffbehältnisse (10a) aufweist, welche gegenüber einer horizontalen Ebene, innerhalb derer der Transportpfad (P) der Kunststoffbehältnisse (10) verläuft, schräg angeordnet ist und welche geeignet ist, die Kunststoffbehältnisse (10a) quer zu dem Transportpfad (P) abzudrängen.

6. Transport- und Aussondervorrichtung (1) nach Anspruch 5,
**dadurch gekennzeichnet, dass**
die Abdrängeinrichtung (6) eine zweite Kontaktfläche (64) zum Kontaktieren der Kunststoffbehältnisse (10a) aufweist, welche gegenüber einer horizontalen Ebene, innerhalb derer der Transportpfad (P) der Kunststoffbehältnisse (10) verläuft, schräg angeordnet ist und welche geeignet ist, die Kunststoffbehältnisse quer zu dem Transportpfad (P) abzudrängen.

7. Transport- und Aussondervorrichtung (1) nach Anspruch 5,
**dadurch gekennzeichnet, dass**
die Kunststoffbehältnisse seitlich nach außen aus der Mitte heraus bezüglich des Transportpfades (P) abgedrängt werden.

8. Transport- und Aussondervorrichtung (1) nach Anspruch 5,
**dadurch gekennzeichnet, dass**
zwischen der ersten Kontaktfläche (62) und der zweiten Kontaktfläche (64) eine - insbesondere geradlinig verlaufende - Kante (69) ausgebildet ist.

9. Transport- und Aussondervorrichtung (1) nach wenigstens einem der vorangegangenen Ansprüche,
**dadurch gekennzeichnet, dass**
die Abdrängeinrichtung (6) einen Anfangsabschnitt aufweist, in dem sich ein Abstand zwischen den Kunststoffbehältnissen (10) und der Abdrängeinrichtung (4) in der Transportrichtung der Kunststoffvorformlinge verringert.

10. Transport- und Aussondervorrichtung (1) nach wenigstens einem der vorangegangenen Ansprüche,
**dadurch gekennzeichnet, dass**
die Transport- und Aussondervorrichtung (1) einen weiteren Drängbereich (52) aufweist, der wenigstens einen Teil der die Kunststoffbehältnisse (10) nach unten drängt.

11. Verfahren zum Transportieren von Kunststoffbehältnissen und insbesondere von Kunststoffvorformlingen (10), wobei die Kunststoffbehältnisse (10) von einer Transporteinrichtung (2) entlang eines vorgegebenen Transportpfades (P) transportiert werden und wobei fehlerhaft transportierte Kunststoffbehältnisse (10a) von einer Aussondereinrichtung (4) von dem Transport ausgesondert werden,
**dadurch gekennzeichnet, dass**
diese fehlerhaft transportierten Kunststoffbehältnisse (10a) zunächst von einer Abdrängeinrichtung (6), welche in Transportrichtung zumindest teilweise stromaufwärts der Aussondereinrichtung (4) angeordnet ist, kontaktiert und durch diesen Kontakt quer zu dem Transportpfad (P) von dem Transportpfad (P) abgedrängt werden und die derart abgedrängten Kunststoffbehältnisse (10a) von der Aussondereinrichtung (4) ausgesondert werden.

12. Verfahren nach Anspruch 11
**dadurch gekennzeichnet, dass**
die Kunststoffbehältnisse (10a) zumindest zeitweise durch ihre eigene Bewegung entlang des Transportpfades (P) abgedrängt werden.

## Claims

1. A conveying and removal apparatus (1) for plastics material containers, and in particular for plastics material pre-forms (10), with a conveying device (2) which conveys the plastics material containers (10) along a pre-set conveying path (P), and with a removal device (4) which is arranged along the conveying path (P) and which is suitable for removing defectively conveyed plastics material pre-forms (10a) from the conveying path, **characterized in that** the conveying and removal device (1) has an ejection device (6) which is arranged in the conveying direction of the plastics material containers upstream of the removal device (4) at least in part and which ejects these plastics material containers (10a) transversely to the conveying path (P) into a region in which these plastics material containers (10a) are capable of being removed from the removal device (4).

2. A conveying and removal apparatus (1) according to claim 1, **characterized in that** the removal device (4) has at least one contact body (42) which contacts the plastics material containers (10a) in order to remove them.

3. A conveying and removal apparatus (1) according to at least one of the preceding claims, **characterized in that** the ejection device (6) is arranged above the conveying path of the plastics material containers (10a).

4. A conveying and removal apparatus (1) according to at least one of the preceding claims, **characterized in that** the ejection device (6) is arranged so as to be stationary with respect to the conveying path (P) of the plastics material containers (10).

5. A conveying and removal apparatus (1) according to at least one of the preceding claims, **characterized in that** the ejection device (6) has a first contact face (62) for contacting the plastics material containers (10a) which is arranged obliquely with respect to a horizontal plane - inside which the conveying path (P) of the plastics material containers (10) extends - and which is suitable for removing the plastics material containers (10a) transversely to the conveying path (P).

6. A conveying and removal apparatus (1) according to claim 5, **characterized in that** the ejection device (6) has a second contact face (64) for contacting the plastics material containers (10a) which is arranged obliquely with respect to a horizontal plane - inside which the conveying path (P) of the plastics material containers (10) extends - and which is suitable for removing the plastics material containers transversely to the conveying path (P).

7. A conveying and removal apparatus (1) according to claim 5, **characterized in that** the plastics material containers are ejected laterally out of the centre towards the outside with respect to the conveying path (P).

8. A conveying and removal apparatus (1) according to claim 5, **characterized in that** an edge (69) - in particular extending in a straight line - is formed between the first contact face (62) and the second contact face (64).

9. A conveying and removal apparatus (1) according to at least one of the preceding claims, **characterized in that** the ejection device (6) has an initial portion in which a distance between the plastics material containers (10) and the ejection device (4) [*sic*] is reduced in the conveying direction of the plastics material pre-forms.

10. A conveying and removal apparatus (1) according to at least one of the preceding claims, **characterized in that** the conveying and removal apparatus (1) has a further pushing region (52) which pushes the at least one part of the plastics material containers (10) downwards.

11. A method of conveying plastics material containers, and in particular plastics material pre-forms (10), wherein the plastics material containers (10) are conveyed by a conveying device (2) along a pre-set conveying path (P), and wherein defectively conveyed plastics material containers (10a) are removed from the conveying by a removal device (4), **characterized in that** these defectively conveyed plastics material containers (10a) are first contacted by an ejection device (6) which is arranged in the conveying direction upstream of the removal device (4) at least in part and are ejected from the conveying path (P) by this contact transversely to the conveying path (P) and the plastics material containers (10a) ejected in this way are removed by the removal device (4).

12. A method according to claim 11, **characterized in that** the plastics material containers (10a) are ejected at least for a time by their own movement along the conveying path (P).

## Revendications

1. Dispositif de transport et de tri (1) pour des récipients en matière plastique et en particulier pour des préformes en matière plastique (10), comprenant un système de transport (2) qui transporte les récipients en plastique (10) le long d'un trajet de transport (P) prédéfini, et comprenant un système de tri (4) disposé le long du trajet de transport (P), lequel est apte à éliminer du trajet de transport des préformes en plastique (10a) transportées par erreur,
**caractérisé en ce que**
le dispositif de transport et de tri (1) présente un système de refoulement (6) disposé dans le sens de transport des récipients en matière plastique, au moins en partie en amont du système de tri (4), lequel refoule lesdits récipients en plastique (10a) de manière transversale par rapport au trajet de transport (P) dans une zone dans laquelle lesdits récipients en matière plastique (10a) peuvent être triés par le système de tri (4).

2. Dispositif de transport et de tri (1) selon la revendication 1,
**caractérisé en ce que**
le système de tri (4) présente au moins un corps de contact (42), qui établit un contact avec les récipients en plastique (10a) afin de trier ces derniers.

3. Dispositif de transport et de tri (1) selon au moins l'une quelconque des revendications précédentes,
**caractérisé en ce que**
le système de refoulement (6) est disposé au-dessus du trajet de transport des récipients en matière plastique (10a).

4. Dispositif de transport et de tri (1) selon au moins l'une quelconque des revendications précédentes,
**caractérisé en ce que**
le système de refoulement (6) est disposé de manière rigide par rapport au trajet de transport (P) des récipients en matière plastique (10).

5. Dispositif de transport et de tri (1) selon au moins l'une quelconque des revendications précédentes,
**caractérisé en ce que**
le système de refoulement (6) présente une première face de contact (62) servant à établir un contact avec les récipients en matière plastique (10a), laquelle est disposée à l'oblique par rapport à un plan horizontal, à l'intérieur duquel le trajet de transport (P) des récipients en plastique (10) s'étend, et qui est appropriée pour refouler les récipients en matière plastique (10a) de manière transversale par rapport au trajet de transport (P).

6. Dispositif de transport et de tri (1) selon la revendication 5,
**caractérisé en ce que**
le système de refoulement (6) présente une deuxième face de contact (64) servant à établir un contact avec les récipients en matière plastique (10a), laquelle est disposée à l'oblique par rapport à un plan horizontal, à l'intérieur duquel le trajet de transport (P) des récipients en plastique (10) s'étend, et qui est appropriée pour refouler les récipients en matière plastique de manière transversale par rapport au trajet de transport (P).

7. Dispositif de transport et de tri (1) selon la revendication 5,
**caractérisé en ce que**
les récipients en matière plastique sont refoulés sur le côté vers l'extérieur hors du centre par rapport au trajet de transport (P).

8. Dispositif de transport et de tri (1) selon la revendication 5,
**caractérisé en ce qu'**
une arête (69) s'étendant en particulier de manière rectiligne est réalisée entre la première face de contact (62) et la deuxième face de contact (64).

9. Dispositif de transport et de tri (1) selon au moins l'une quelconque des revendications précédentes,
**caractérisé en ce que**
le système de refoulement (6) présente une section de début, dans laquelle une distance entre les récipients en matière plastique (10) et le système de refoulement (4) se réduit dans le sens de transport des préformes en matière plastique.

10. Dispositif de transport et de tri (1) selon au moins l'une quelconque des revendications précédentes,
**caractérisé en ce que**
le dispositif de transport et de tri (1) présente une autre zone de refoulement (52), qui refoule au moins une partie des récipients en plastique (10) vers le bas.

11. Procédé servant à transporter des récipients en matière plastique et en particulier des préformes en matière plastique (10), les récipients en plastique (10) étant transportés le long d'un trajet de transport (P) prédéfini par un dispositif de transport (2) et des récipients en matière plastique (10a) transportés par erreur étant triés du transport par un système de tri (4),
**caractérisé en ce que**
lesdits récipients en matière plastique (10a) transportés par erreur sont dans un premier temps mis en contact par un système de refoulement (6), qui est disposé dans une direction de transport au moins en partie en amont du système de tri (4), et sont refoulés par ledit contact de manière transversale par rapport au trajet de transport (P) du trajet de transport (P), et **en ce que** les récipients en matière plastique (10a) refoulés de cette manière sont triés par le système de tri (4).

12. Procédé selon la revendication 11,
**caractérisé en ce que**
les récipients en matière plastique (10a) sont refoulés au moins par intermittence par leur propre déplacement le long du trajet de transport (P).
